# FASCICULE DE BREVET EUROPEEN

(11) **EP 2 897 790 B1**
(45) Date de publication et mention de la délivrance du brevet: **09.11.2016**
(21) Numéro de dépôt: 13763080.2
(22) Date de dépôt: 18.09.2013
(51) Int. Cl.: B29D 30/06

(54) **DISPOSITIF DE VULCANISATION À SECTEURS MOBILES RADIALEMENT POUR PNEUMATIQUE**
VULKANISIERUNGSVORRICHTUNG MIT RADIAL BEWEGLICHEN SEGMENTEN FÜR EINEN REIFEN
VULCANIZING DEVICE WITH RADIALLY MOBILE SEGMENTS FOR A TYRE

(30) Priorité: 24.09.2012 FR 1258943
(43) Date de publication de la demande: 29.07.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DEFAISSE, Christian, F-63040 Clermont-Ferrand Cedex 9 (FR)
(74) Mandataire: Noel, Luminita
(86) Numéro de dépôt international: PCT/EP2013/069388
(87) Numéro de publication internationale: WO 2014/044713

(56) Documents cités:
- EP-A2- 0 320 588
- WO-A1-2010/019134
- GB-A- 1 409 008
- US-A- 3 990 823

## Description

La présente invention concerne un dispositif de vulcanisation pour pneumatiques, plus précisément du type où la partie destinée à former la bande de roulement du pneumatique est divisée en plusieurs secteurs mobiles radialement par rapport à l'axe du moule. Dans ce type de dispositif de vulcanisation, l'espace de moulage de la surface extérieure du pneumatique est défini par deux coquilles, assurant chacune le moulage d'un flanc, et par une couronne de secteurs assurant le moulage de la bande de roulement, ces pièces formant un moule de cuisson.

Les dispositifs de vulcanisation assurent la vulcanisation du pneumatique par une mise sous pression et un apport de calories à une ébauche de pneumatique. Les dispositifs de vulcanisation du type à secteurs sont réalisés en plusieurs pièces assemblées et animées par une cinématique appropriée en relation avec la presse de cuisson.

Les méthodes utilisées pour fermer radialement les secteurs sur l'ébauche de pneumatique font souvent appel à une fermeture des secteurs par coulissement le long de la surface interne d'une couronne de fermeture conique. Parmi les dispositifs de vulcanisation utilisant une telle couronne de fermeture conique, on préfère, pour des raisons de facilité d'accès à l'espace de moulage lors du chargement et du déchargement du pneumatique, ceux comportant des moules dites à conteneur où la coquille inférieure est fixe et la fermeture de la cavité de moulage se fait en amenant d'abord en contact avec le pneumatique cru la coquille supérieure de moulage du flanc, mise en mouvement par le plateau supérieur du conteneur, puis les secteurs. Lors de l'ouverture du moule, les secteurs accompagnent la coquille supérieure lorsque celle-ci se soulève.

Un tel moule de cuisson à conteneur est décrit dans le document US-A-3 779 677. Le moule comprend deux coquilles latérales servant au moulage d'un flanc du pneumatique et une couronne périphérique comportant des éléments de moulage de la bande de roulement, cette couronne étant divisée en plusieurs secteurs ayant des faces latérales perpendiculaires à l'axe du moule et des faces transversales radiales. La fermeture du moule s'effectue en rapprochant axialement les coquilles latérales, puis en déplaçant radialement les secteurs vers l'axe du moule. Le mouvement radial des secteurs est effectué par une couronne de fermeture conique mise en mouvement par le plateau supérieur de la presse. La couronne de fermeture comprend, sur sa face radialement interne, plusieurs pièces en forme de T, chacune étant amenée à coulisser dans un canal ayant une surface de guidage inclinée de forme correspondante pratiquée sur la surface radialement externe d'un secteur de moule. Des éléments de couplage pivotants relient le plateau mobile de support de la coquille supérieure aux secteurs permettant à ces derniers de se déplacer axialement avec le plateau et de coulisser radialement dans des fentes radiales du plateau.

Un autre exemple de dispositif de vulcanisation à secteurs fonctionnant sur le même principe que celui du document précédent est décrit dans le document EP-0 170 109, la couronne de fermeture conique comportant, sur sa surface radialement interne, des rainures de guidage dans lesquelles coulissent les pièces de couplage de forme correspondante portées par les secteurs du moule. Des éléments de couplage prismatiques relient les faces supérieures des secteurs au plateau mobile permettant aux secteurs de se déplacer axialement avec le plateau et de coulisser radialement dans des guides prismatiques de forme correspondante du plateau.

L'inconvénient principal de ces dispositifs de vulcanisation est que l'ensemble d'actionnement des secteurs est dédié à un moule spécifique, les pièces du dispositif étant usinées de manière à s'adapter à un nombre fixe de secteurs ayant chacun un angle prédéterminé et une amplitude de découpe de leurs bords imposée par le motif et la circonférence du pneumatique à vulcaniser. Plus particulièrement, les couronnes de fermeture de l'état de la technique sont équipées de glissières fixées sur la paroi radialement interne de la couronne pour coopérer avec un nombre donné de secteurs du moule et un positionnement angulaire préétabli de ces derniers. De surcroît, le plateau supérieur mobile est usiné de manière à aménager les parties de guidage pour le rappel des secteurs, ces parties étant imposées par le nombre et la position des secteurs du moule. Ainsi, la couronne de fermeture et le plateau supérieur de l'état de la technique sont réalisés à demeure et adaptés à un seul moule de vulcanisation. Ceci rend couteuse la fabrication de la couronne et du plateau du dispositif de vulcanisation, tout en limitant leur utilisation à un nombre restreint de types de pneumatiques.

On connaît par ailleurs le document WO 2010/019134 au nom de la demanderesse où il a été proposée un dispositif de vulcanisation comportant des éléments de fixation des plusieurs demi-secteurs adjacents, les éléments de fixation étant réalisés de manière à pouvoir être ajustés sur la périphérie de chaque demi-couronne de fermeture. Cette solution est toutefois spécifique à un dispositif de vulcanisation dont le système de fermeture et d'ouverture implique l'utilisation des ressorts de poussée de chaque demi-secteur. Ce document ne saurait pas apporter de solution pour optimiser la structure des moules du type conteneur où chaque secteur doit être relié au plateau mobile et guidé dans son mouvement radial par rapport à ce dernier et, en même temps, de pouvoir coopérer avec une couronne de fermeture.

Le document EP 320588 - A divulgue un dispositif de vulcanisation à secteurs mobiles radialement pour le moulage et la vulcanisation d'un pneumatique comportant un plateau inférieur supportant une coquille inférieure de moulage de flanc de pneumatique, un plateau supérieur mobile axialement supportant une coquille supérieure de moulage de flanc de pneumatique, une couronne de fermeture mobile axialement comportant une face intérieure inclinée, une pluralité de secteurs adjacents disposés circonférentiellement dont les faces radiales intérieures comportent des garnitures de moulage de la bande de roulement du pneumatique et les faces radiales extérieures inclinées sont aptes à coopérer avec des premiers moyens de couplage avec la couronne de fermeture réalisés de sorte que les mouvements axiaux de la couronne de fermeture impliquent un mouvement radial des secteurs, ainsi que des deuxièmes moyens de couplage des secteurs avec le plateau supérieur, aptes à relier les secteurs au plateau supérieur et à autoriser leur mouvement radial, lesdits deuxièmes moyens de couplage pouvant être remplacés quand il s'agit de changer le type des pneumatiques à vulcaniser.

L'objectif de l'invention est de remédier au moins en partie à ces inconvénients et de proposer un dispositif de vulcanisation à secteurs mobiles radialement pour pneumatique permettant son utilisation avec des moules du type conteneur ayant un nombre de secteurs variable.

Cet objectif est atteint par l'invention qui propose un dispositif de vulcanisation à secteurs mobiles radialement pour le moulage et la vulcanisation d'un pneumatique comportant un plateau inférieur supportant une coquille inférieure de moulage de flanc de pneumatique, un plateau supérieur mobile axialement supportant une coquille supérieure de moulage de flanc de pneumatique, une couronne de fermeture mobile axialement comportant une face intérieure inclinée, une pluralité de secteurs adjacents disposés circonférentiellement dont les faces radiales intérieures comportent des garnitures de moulage de la bande de roulement du pneumatique et les faces radiales extérieures inclinées sont aptes à coopérer avec des premiers moyens de couplage avec la couronne de fermeture réalisés de sorte que les mouvements axiaux de la couronne de fermeture impliquent un mouvement radial des secteurs, ainsi que des deuxièmes moyens de couplage desdits secteurs avec le plateau supérieur, aptes à relier les secteurs au plateau supérieur et à autoriser leur mouvement radial, lesdits deuxièmes moyens de couplage étant ajustables sur la circonférence du plateau supérieur.

Par couronne de fermeture on comprend une couronne de fermeture et de frettage des secteurs du moule, la couronne comportant une face intérieure inclinée coopérant avec la partie correspondante inclinée de chaque secteur. Par moule on comprend l'ensemble des pièces destinées à venir en contact direct avec le pneumatique et qui forment une cavité de moulage de ce dernier. Lorsque le dispositif de vulcanisation est monté dans la presse, le plateau inférieur du dispositif est solidaire du plateau inférieur fixe de la presse et le plateau supérieur est solidaire du plateau supérieur de la presse et mobile selon l'axe du moule. Dans le dispositif de vulcanisation de l'invention, la couronne est solidaire d'un mécanisme qui en assure le mouvement selon l'axe du dispositif et peut être élevée et abaissée indépendamment de la coquille supérieure. La face radialement intérieure de la couronne de fermeture est en général une face tronconique. La face radialement extérieure des secteurs qui coopère avec la couronne de fermeture est également tronconique et correspond à la face intérieure de la couronne, l'inclinaison par rapport à l'axe du moule assurant la cinématique des secteurs. Le dispositif de l'invention comprend des premiers moyens de couplage entre les secteurs et la couronne de fermeture, ces moyens de couplage permettant le mouvement radial des secteurs vers l'extérieur, ainsi que vers l'intérieur du dispositif lors du mouvement axial de la couronne de fermeture. De tels moyens de couplage peuvent être des tiges de guidage coulissant dans des rainures ayant par exemple une section en queue d'aronde.

Selon l'invention, le dispositif comprend des deuxièmes moyens de couplage entre les secteurs et le plateau supérieur, aptes à relier les secteurs au plateau supérieur et à autoriser leur mouvement radial, lesdits deuxièmes moyens de couplage étant ajustables sur la circonférence du plateau supérieur. Ainsi, le plateau supérieur mobile du dispositif comporte une bordure radialement extérieure par l'intermédiaire coopérant avec des moyens d'attache des secteurs, directement ou par l'intermédiaire des pièces de liaison, et ceci pour un nombre de secteurs variable et différentes positions angulaires de ces derniers. Par bordure radialement extérieure on comprend une couronne circulaire située sur la périphérie du plateau, à une hauteur inférieure à celle de la surface supérieure du plateau mobile du dispositif. Cette couronne est réalisée par un usinage circulaire périphérique du plateau, elle peut être une surface plane, une nervure ou une rainure s'étendant à partir du pourtour de la face supérieure du plateau mobile.

Ceci permet d'adapter les deuxièmes moyens de couplage sur la périphérie du plateau mobile, leur position étant déterminée par la position circonférentielle de chaque segment. Ainsi, avec un seul plateau et un nombre variable de pièces de couplage, on arrive à ajuster circonférentiellement la position des pièces de couplage pour permettre à un nombre variable de secteurs de moule de coopérer avec un seul type de plateau supérieur mobile.

De préférence, lesdits premiers moyens de couplage avec la couronne de fermeture comportent une pluralité de pièces de guidage réalisées de manière ajustable sur la circonférence de ladite couronne, chaque pièce de guidage venant coopérer avec une rainure de guidage d'un secteur.

Le dispositif de vulcanisation de l'invention comprend, de plus, plusieurs pièces de guidage qui sont mobiles et adaptables sur la circonférence de la couronne de fermeture et qui sont amenées à être fixées dans une position déterminée par celle de la rainure des secteurs de moule avec laquelle chaque pièce de guidage est amenée à coopérer. On arrive ainsi à ajuster cironférentiellement facilement la position d'une pièce de guidage sur la couronne de fermeture et à adapter le nombre des pièces de guidage au nombre de secteurs du moule. Il est également possible de réaliser, pour un même diamètre de moule, un nombre variable de secteurs, pouvant avoir des angles au sommet différents, avec différentes amplitudes de découpe au niveau de leurs faces transversales et d'en adapter ensuite plus facilement la couronne de fermeture. On obtient ainsi une couronne de fermeture simplifiée qui peut s'adapter facilement à plusieurs types de pneumatiques. Par ailleurs, les sections transversales des tiges et rainures sont identiques, mis à part un jeu de coulissement aménagé entre elles, ce qui permet d'avoir une bonne surface de contact de la couronne avec les secteurs, sur toute sa circonférence assurant ainsi un bon transfert thermique entre la couronne de fermeture et les secteurs du dispositif. On arrive ainsi, avec le dispositif de l'invention, à adapter le plateau mobile et également la couronne de fermeture à la position angulaire et au nombre des secteurs de moulage.

Dans une première variante de réalisation de l'invention, lesdits deuxièmes moyens de couplage comportent une bordure radialement extérieure dudit plateau supérieur sur laquelle vient en appui un galet monté libre en rotation autour d'un axe horizontal d'un secteur. Ainsi, le déplacement radial des secteurs est permis de par la rotation du galet (ou de plusieurs galets agencés sur un même axe) sur la bordure radialement extérieure du plateau.

De préférence, ledit axe horizontal est supporté par une bride coudée montée sur la face latérale supérieure d'un secteur. Ceci permet de maintenir facilement le galet au niveau du plateau supérieur.

Dans une deuxième variante de l'invention, lesdits moyens d'attache comportent chacun une traverse horizontale montée sur la face latérale supérieure d'un secteur, ladite traverse étant apte à coulisser sur les rails d'une mâchoire amovible coopérant avec ladite bordure radialement extérieure du plateau supérieur. Cette solution suppose un agencement de plusieurs mâchoires amovibles qui seront fixées sur la bordure radialement extérieure du plateau selon le nombre et la position angulaire des secteurs du dispositif afin de permettre le déplacement radial des secteurs lors de la fermeture et de l'ouverture du dispositif.

De préférence, ladite mâchoire comprend un rail circulaire apte à coopérer avec une rainure de forme correspondante de ladite bordure radialement extérieure. Ceci permet une meilleure orientation et fixation des mâchoires sur le plateau.

Avantageusement, lesdites pièces de guidage sont fixées de manière ajustable dans une encoche circonférentielle de ladite couronne de fermeture.

Ainsi, une pièce de guidage peut comporter une partie d'accroche pour s'insérer dans une encoche circonférentielle de forme correspondante de la couronne de fermeture, ce qui assure une meilleure fixation dans une position déterminée par celle de la rainure d'un secteur de chaque pièce de guidage.

De préférence, ladite pièce de guidage comporte une tige de guidage ayant au moins une surface de guidage apte à coulisser dans ladite rainure et un crochet disposé à l'une des extrémités de ladite tige pour coopérer avec ladite encoche circonférentielle.

Ceci permet de faciliter le montage du dispositif, la tige de guidage pouvant être insérée facilement entre la couronne et les secteurs jusqu'à ce qu'elle vient s'accrocher sur le rebord de l'encoche de la couronne. L'encoche et la partie saillante ont des profils complémentaires, par exemple de forme conique pour permettre une bonne orientation des pièces de guidage et d'en faciliter la fixation.

Avantageusement, l'autre extrémité de ladite tige de guidage coopère avec des moyens de fixation sur un rebord circulaire de ladite couronne de fermeture. Ceci permet de fixer facilement la tige de guidage sur la couronne, par exemple en utilisant des vis de fixation sur le rebord opposé de celui de l'encoche de la couronne.

De préférence, lesdits moyens de fixation comprennent une entretoise comportant une partie circonférentielle de fixation à ladite couronne et une partie radiale de fixation à ladite tige. Ceci permet d'immobiliser en rotation la tige de guidage sur la circonférence de la couronne de fermeture.

Avantageusement, la partie circonférentielle de ladite entretoise comporte une encoche qui coopère avec une nervure circonférentielle de forme complémentaire appartenant à ladite couronne de fermeture. La nervure a de préférence un profil de forme conique, qui permet un serrage avec rattrapage de jeux de la pièce de guidage sur la couronne de fermeture.

De préférence, ladite partie radiale de ladite entretoise comporte une butée d'entraînement d'un secteur. La butée d'entraînement de secteur peut être une protubérance coopérant avec le fond d'une rainure du secteur ou, à l'inverse, une paroi plane qui referme une rainure pratiquée dans la pièce de guidage pour coopérer avec une protubérance d'un secteur.

Avantageusement, ladite rainure de guidage est placée sensiblement dans une partie circonférentielle du secteur correspondant à la projection sur celle-ci des coordonnées du centre de gravité d'un secteur. On comprend que le centre de la rainure est placé dans la partie circonférentielle de la surface radialement extérieure d'un secteur correspondant à la projection sur cette face du centre de gravité du secteur, ce qui permet de positionner les efforts agissant sur le secteur dans l'axe de la rainure et d'équilibrer la cinématique de l'ensemble.

De préférence, ladite surface de guidage des tiges de guidage comprend des plaques à faible coefficient de frottement. Ceci améliore le glissement des pièces de guidage et assure un entraînement sans à-coups des secteurs. L'invention sera mieux comprise grâce à la suite de la description, qui s'appuie sur les figures suivantes :
- la figure 1 est une vue en perspective simplifiée d'un dispositif de vulcanisation de pneumatique selon une première variante de réalisation de l'invention, le dispositif étant illustré en position d'ouverture ;
- la figure 2 est une vue en perspective d'un secteur qui équipe le dispositif de la figure 1 ;
- la figure 3 est une vue en perspective d'un ensemble formant une couronne de fermeture selon l'invention ;
- la figure 4 est une vue en perspective d'une pièce de guidage et de ses moyens de fixation à la couronne de fermeture de l'invention ;
- la figure 5 illustre, par une vue en coupe simplifiée, l'engagement d'une pièce de guidage de l'invention dans la rainure de guidage d'un secteur selon un autre exemple de réalisation de l'invention ;
- la figure 6 est une vue en perspective d'un dispositif de vulcanisation de pneumatique selon une deuxième variante de réalisation de l'invention, le dispositif étant illustré en position de fermeture ;
- la figure 7 est une vue en perspective d'un plateau supérieur qui équipe le dispositif de la figure 6.

Sur les différentes figures, les éléments identiques ou similaires portent la même référence. Leur description n'est donc pas systématiquement reprise.

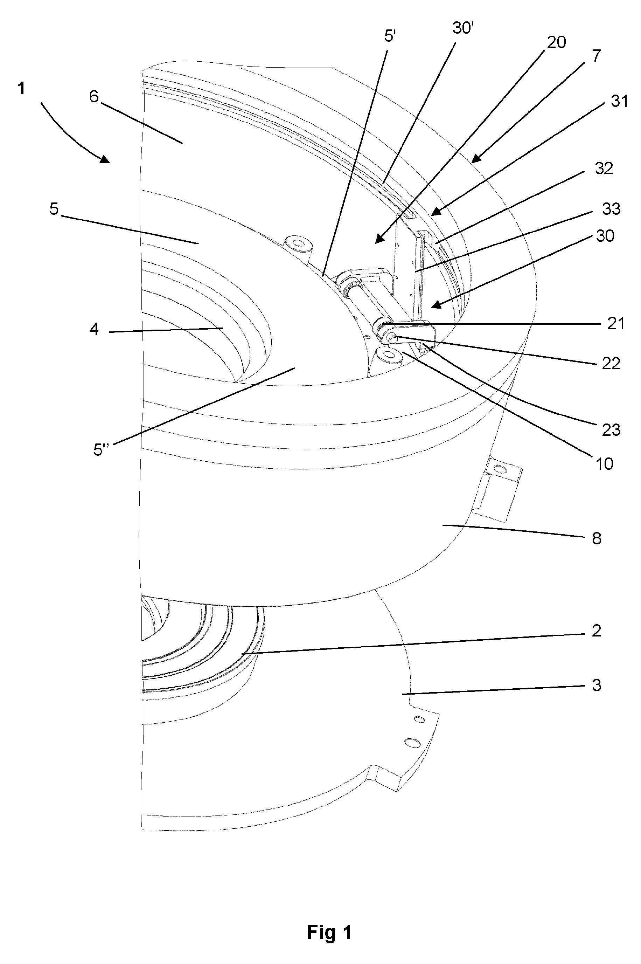

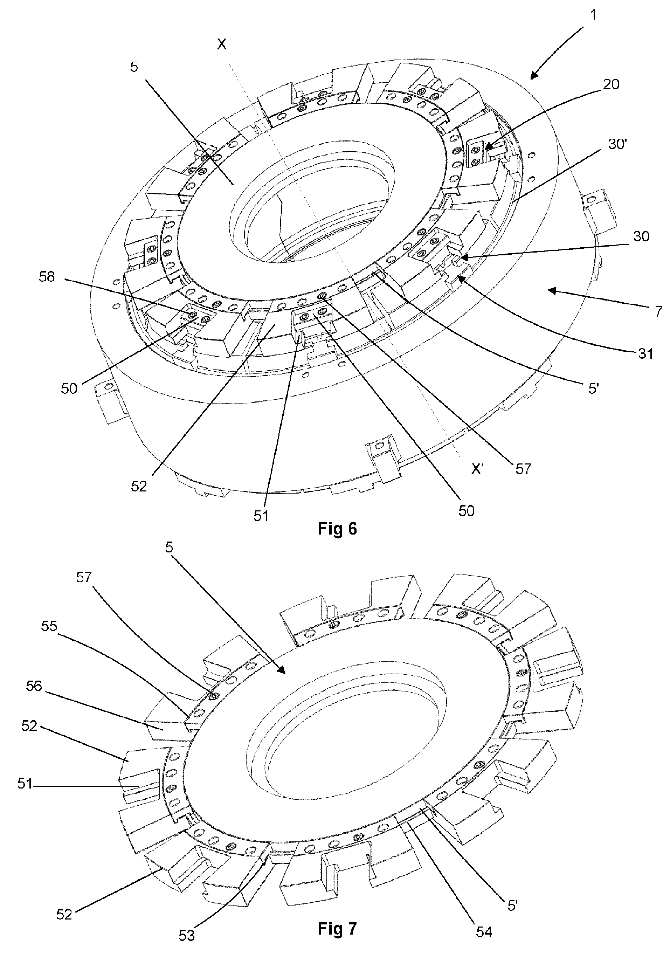

La figure 1 illustre un dispositif 1 de vulcanisation de pneumatique à secteurs mobiles radialement selon l'invention qui est apte à coopérer avec une presse de vulcanisation. Le dispositif 1 comprend une coquille inférieure 2 solidaire d'un plateau inférieur 3 par l'intermédiaire duquel le dispositif est monté sur la presse de vulcanisation. Le plateau inférieur 3 supporte la coquille inférieure 2, assure le centrage du dispositif par rapport à la presse de vulcanisation et la transmission des calories vers la coquille inférieure 2. Le dispositif comprend également une coquille supérieure 4 solidaire d'un plateau supérieur 5. Le plateau supérieur 5 est mobile en étant solidaire du vérin à double effet de la presse. Il a pour rôle d'entraîner les secteurs du dispositif en ouverture et en fermeture. Le plateau supérieur 5 apporte les calories à la coquille supérieure 4 lorsqu'il est en contact avec le plateau chauffant haut de la presse. Le dispositif comprend également une couronne de fermeture 7 qui est une couronne chauffante ayant une surface intérieure 6 conique (faisant par exemple un angle de 15° avec la verticale) et une surface extérieure 8 cylindrique. Des moyens de chauffe (par exemple un canal de circulation de vapeur ou des éléments chauffants électriques) sont disposés à l'intérieur de la couronne de fermeture 7 et fournissent un apport de calories aux secteurs du dispositif afin de permettre la vulcanisation de la bande de roulement. La couronne de fermeture 7 est solidaire d'un mécanisme qui en assure le mouvement axial, selon l'axe X-X' (fig. 6) du dispositif, et peut être rendue mobile axialement indépendamment du plateau supérieur 5. Le dispositif 1 comprend une pluralité de secteurs 10 adjacents disposés circonférentiellement (un seul étant illustré sur a figure 1) et coopérant chacun avec le plateau supérieur 5 et la couronne de fermeture 7. La partie radialement intérieure des secteurs 10 forme la partie de moulage de la bande de roulement du pneumatique. Le nombre des secteurs 10 est déterminé en fonction de la circonférence et du motif de la sculpture du pneumatique, ils peuvent par exemple être en nombre de sept à douze pour un pneu de tourisme et de onze à vingt-quatre pour un pneu de poids lourd. Les secteurs qui équipent un moule peuvent avoir des tailles identiques ou différentes pour s'adapter aux caractéristiques recherchées de la bande de roulement du pneumatique.

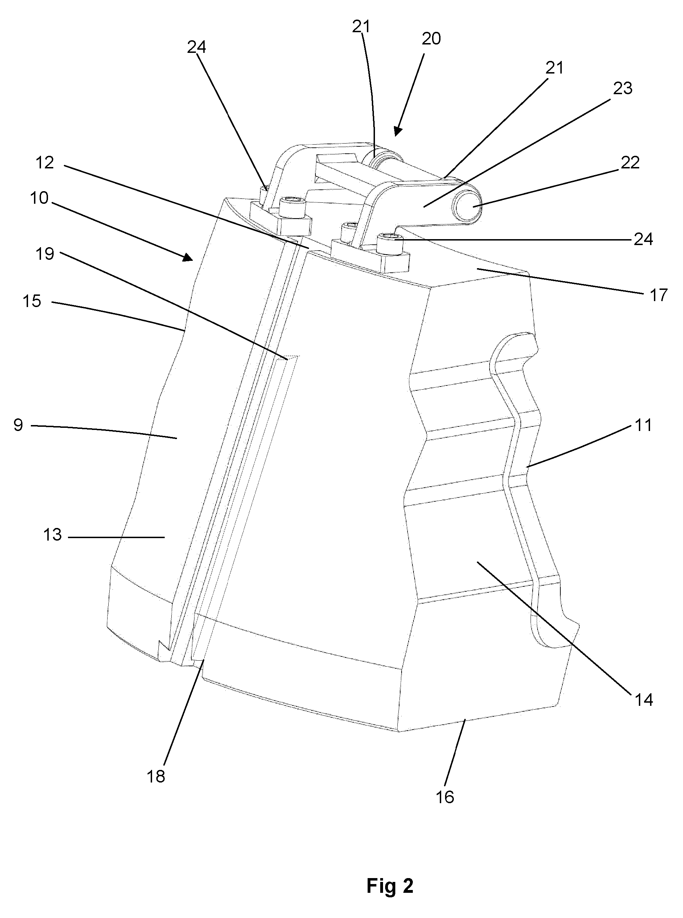

Tel que mieux visible à la figure 2, un secteur 10 comprend un corps 9 qui reçoit, sur sa face radiale intérieure, une garniture 11, qui est un élément moulant du sommet du pneumatique, et, sur sa face radiale extérieure 13, une rainure de guidage 12 de direction sensiblement verticale, parallèle à la surface radiale extérieure 13 (par exemple faisant un angle de 15° avec la verticale) est destinée à coopérer avec une pièce de guidage complémentaire de la couronne de fermeture 7 formant les premiers moyens de couplage 30 du dispositif, tel qu'il sera expliqué par la suite. Dans l'exemple représenté aux dessins, la rainure de guidage 12 a une section transversale en forme de T. Une rainure longitudinale 18 est pratiquée parallèlement à la rainure de guidage 12, elle est débouchante à l'une de ses extrémités au niveau de la face latérale inférieure 16 du secteur et, à l'extrémité opposée, elle comporte une paroi transversale 19 qui sert à limiter la course d'un secteur 10 en coopérant avec une partie correspondante d'une pièce de guidage.

La garniture 11 est réalisée généralement en aluminium par une technique d'injection et le corps 9 est réalisé, de préférence, par usinage à partir d'une couronne en fonte. La garniture 11 (réalisée en une seule pièce ou en plusieurs éléments indépendants) est fixée par des joncs et des vis de fixation (non représentés) sur le corps 9. D'autres modes de réalisation de la garniture 1 et de son assemblage avec le corps 9 du secteur peuvent être envisagés, la garniture pouvant par exemple être réalisée monobloc (par exemple par injection) avec ce dernier. Les faces transversales 14, 15 du secteur 10 sont découpées selon un profil donné et sont réalisées de manière à ce que deux secteurs 10 adjacents puissent s'emboîter en position de fermeture du moule. La rainure de guidage 12 est pratiquée sur la surface radialement extérieure d'un secteur 10 et son centre est situé dans une partie circonférentielle correspondant sensiblement à la projection du centre de gravité d'un secteur 10 sur la face radiale extérieure de ce dernier, avec une tolérance de 1°, afin que les efforts agissant sur le secteur au moment de la fermeture et de l'ouverture du moule soient équilibrés. La face latérale inférieure 16 sert d'appui au secteur 10 sur le plateau inférieur 3 et la face latérale supérieure 17 reçoit des moyens d'attache 20 au plateau supérieur 5 du dispositif.

Selon l'invention, on adapte le plateau supérieur 5 du dispositif de vulcanisation 1 au nombre et à la position angulaire des secteurs 10 de manière à pouvoir l'utiliser avec différentes configurations de moules, notamment en utilisant des deuxièmes moyens de couplage 20 entre le plateau supérieur 5 du dispositif et les secteurs 10 ajustables sur la circonférence du plateau supérieur 5. Selon un aspect avantageux de l'invention, on adapte également la couronne de fermeture 7 du dispositif au nombre et à la position angulaire des secteurs 10, notamment en utilisant des premiers moyens de couplage entre les secteurs 10 et la couronne de fermeture 7 qui sont ajustables sur la circonférence de la couronne de fermeture 7. Ceci permet de standardiser la couronne de fermeture 7 et le plateau supérieur 5 et pouvoir les utiliser ensuite avec différents moules.

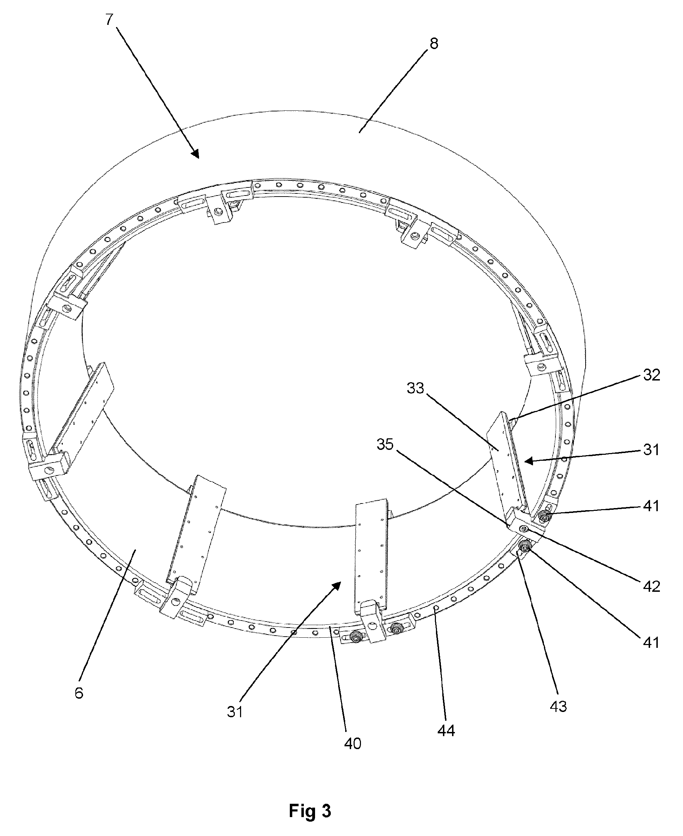

Une couronne de fermeture 7 de l'invention est mieux visible aux figures 1 et 3. La couronne de fermeture 7 est une pièce annulaire qui comporte une encoche circonférentielle 30' dans laquelle peuvent glisser les parties d'accroche des pièces de guidage 31. Dans l'exemple représenté aux figures, une pièce de guidage 31 est une pièce montée amovible par rapport à la couronne de fermeture 7, elle comporte une tige de guidage 33 se terminant à son extrémité supérieure par un crochet 32. Le crochet 32 a de préférence une forme en V et l'encoche circonférentielle 30' a un profil de forme complémentaire. L'extrémité inférieure 34 de la pièce de guidage 31 coopère avec une entretoise 35 permettant sa fixation dans la partie inférieure de la couronne de fermeture 7. La tige de guidage 33 comporte des plaques 45 à faible coefficient de frottement montées sur ses surfaces de guidage venant en contact avec les surfaces complémentaires de la rainure de guidage 12. Les tiges de guidage 33 de la couronne de fermeture 7 et les rainures de guidage 12 des secteurs 10 forment les premiers moyens de couplage 30.

Selon un aspect intéressant de l'invention, la couronne de fermeture 7 est réalisée en acier nitruré et vient se fermer sur des secteurs 10 réalisés, eux, en fonte. Il a ainsi été constaté lors des tests effectués que, pour un bon état de la surface, les deux pièces présentaient de bonnes propriétés de glissement et, pour cette raison, il a été renoncé au recouvrement, généralement utilisé dans l'état de la technique, de la surface intérieure de la couronne de fermeture 7 avec des plaques à faible coefficient de frottement. Ceci permet d'éviter d'avoir recours à des interfaces supplémentaires et d'obtenir un bon contact thermique entre la couronne de fermeture 7 et les secteurs 10.

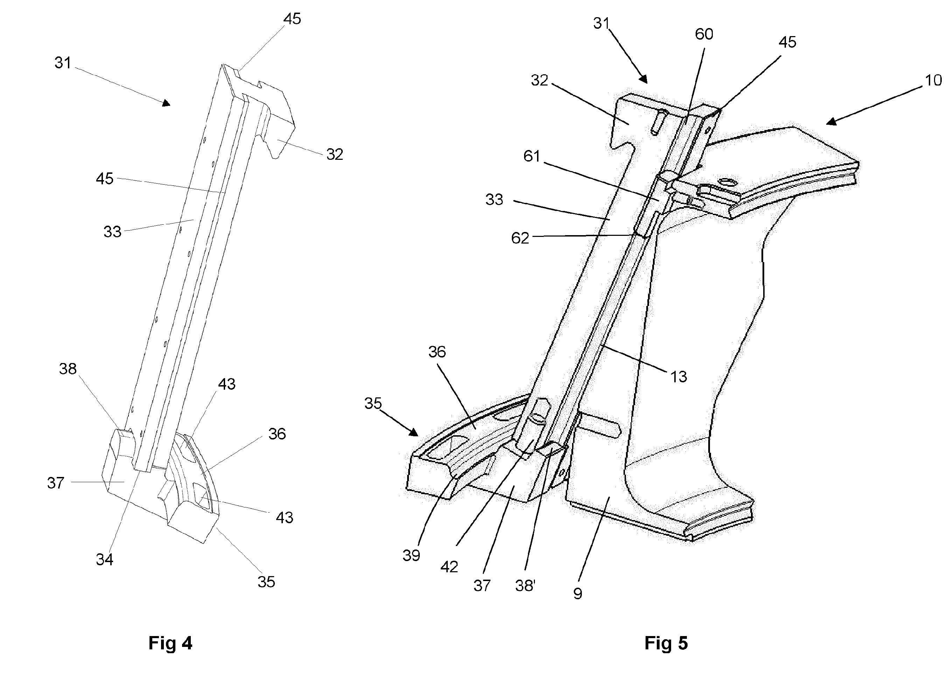

Tel que mieux visible à la figure 4, l'entretoise 35 comprend une partie circonférentielle 36 de fixation sur le rebord de la couronne de fermeture 7 et une partie radiale 37 d'immobilisation d'une pièce de guidage 31.

La partie circonférentielle 36 comporte un canal circonférentiel 39 ayant une section transversale de même forme que celle du rebord inférieur 40 (fig. 3), de préférence en V, de la couronne de fermeture 7. Deux fentes oblongues 43 permettent la fixation de l'entretoise 35 moyennant des vis 41 dans des orifices 44 pratiqués de manière uniforme sur le rebord inférieur de la couronne de fermeture 7. La fixation des pièces de guidage 31 sur la couronne de fermeture 7, en partie haute (dans l'encoche circonférentielle 30') et basse (dans le rebord inférieur 40) de cette dernière, se fait sur un profil de contact en queue d'aronde, ce qui permet un serrage sur surface conique avec rattrapage des jeux de montage.

Dans l'exemple illustré à la figure 4, la partie radiale 37 comporte une protubérance 38 apte à coopérer avec la rainure 18 d'un secteur 10, la partie supérieure de la protubérance 38 venant en butée contre la paroi transversale 19 du secteur 10 (fig. 2) pour limiter en partie haute la course des secteurs 10. Une vis 42 assure la fixation de la pièce de guidage 31 sur l'entretoise 35.

Dans un autre exemple de réalisation visible à la figure 5, la pièce de guidage 31 comprend une rainure longitudinale 60 coopérant avec une pastille 61 montée sur la face radiale extérieure 13 d'un secteur 10, par exemple en utilisant une vis de fixation. La partie inférieure 62 de la pastille 61 coopère avec un méplat 38' de la partie radiale 37 pour former une butée d'entraînement axial des secteurs 10. Dans cet exemple, la position de la pastille 61 peut être ajustée pour limiter la course d'ouverture des secteurs 10.

La tige de guidage 33 a une section transversale en forme de T et est apte à coopérer avec la rainure de guidage 12 du secteur 10. D'autres formes des sections transversales des rainures 12 et des tiges de guidage 33 peuvent être envisagés, tels des sections en queue d'aronde ou d'autres types de sections comportant deux surfaces de guidage en translation longitudinale d'une tige de guidage 33 dans une rainure de guidage 12 selon une direction inclinée par rapport à l'axe du dispositif permettant en même temps un déplacement radial vers l'intérieur et vers l'extérieur des secteurs 10.

Selon l'invention, chaque secteur 10 comprend des deuxièmes moyens de couplage 20 au plateau supérieur 5 prévus pour que les secteurs 10 puissent coopérer avec une bordure radialement extérieure 5' du plateau supérieur 5 de manière à pouvoir suivre le mouvement axial de ce dernier et à pouvoir se déplacer radialement par rapport au plateau supérieur 5.

Dans une première variante de réalisation de l'invention mieux visible aux figures 1 et 3, les deuxièmes moyens de couplage 20 comprennent deux galets 21 montés libres en rotation autour d'un axe horizontal 22 supporté par une bride coudée 23 fixée, elle, moyennant des vis 24 sur la face latérale supérieure 17 du secteur 10. Les galets 21 sont aptes à venir en appui sur la bordure radialement extérieure 5' du plateau supérieur 5 et, en roulant, ils permettent le mouvement radial des secteurs 10 lors de l'ouverture et de la fermeture du dispositif de l'invention. La bordure radialement extérieure 5' est une couronne périphérique horizontale réalisée en dessous de la surface supérieure 5" de transmission de l'effort de la presse au plateau supérieur 5. Le plateau supérieur 5 a une forme de podium circulaire à deux niveaux.

Dans une deuxième variante de réalisation de l'invention, tel que mieux visible aux figures 6 et 7, les deuxièmes moyens de couplage 20 comprennent une traverse horizontale 50 qui coulisse sur les rails longitudinaux 51 d'une mâchoire 52 fixée de manière amovible au plateau 5. La surface de contact des rails 51 avec la traverse 50 est munie de plaques à faible coefficient de frottement. La traverse horizontale 50 est fixée au moyen des vis 58 sur la partie latérale supérieure 17 d'un secteur 10. La mâchoire 52 comprend un rail circulaire 53 apte à coopérer avec une nervure circulaire 54 de la bordure radialement extérieure 5' du plateau 5. La mâchoire 52 est réalisée en deux parties, une partie supérieure 55 et une partie inférieure 56 qui prennent en sandwich la nervure circulaire 54 du plateau 5 lors de leur fixation au plateau supérieur 5 à l'aide des vis 57. Lors du montage du dispositif de l'invention, on dispose radialement à la périphérie du plateau supérieur 5 un nombre de mâchoires amovibles 52 identique au nombre des secteurs 10 que comporte le dispositif, la fixation en position sur la circonférence du plateau 5 se faisant en fonction de la position de chaque secteur 10.

Le montage d'un dispositif de vulcanisation de l'invention commence par la sélection du nombre de secteurs 10 nécessaires pour réaliser un pneu de taille et motif donnés, leur agencement en couronne autour de la coquille inférieure 2. On pose ensuite la couronne de fermeture 7 autour des secteurs et un insère les tiges de guidage 33 dans les rainures de guidage 12 des secteurs 10, leur crochet 42 prenant appui dans la rainure circonférentielle 30' de la couronne de fermeture 7. On fixe ensuite chaque tige de guidage 33 en position sur la circonférence de la couronne de fermeture 7 en vissant les vis 41,42 de l'entretoise 35 sur le rebord inférieur 40 de la couronne de fermeture 7. Les premiers moyens de couplage 30 sont ainsi en place et on procède ensuite au montage des deuxièmes moyens de couplage 20.

Le montage des deuxièmes moyens de couplage 20 réalisés selon la première variante de réalisation de l'invention (fig. 1) se fait en assemblant le plateau supérieur 5 et la coquille supérieure 4 et en le rapportant sur l'assemblage précédemment décrit. On procède ensuite à la fixation avec des vis 24 des brides coudées 23 portant les galets 21, après avoir préalablement positionné les galets 21 sur la bordure radialement extérieure 5' du plateau supérieur 5.

Le montage des deuxièmes moyens de couplage 20 réalisés selon la deuxième variante de réalisation (fig. 6 et 7) se fait en plaçant d'abord les parties inférieures 56 des mâchoires 52 autour des parties supérieures des tiges de guidage 33 déjà en place. On fixe également, à l'aide des vis 58, une traverse 50 sur la partie latérale supérieure 17 de chaque secteur 10. On assemble le plateau supérieur 5 et la coquille supérieure 4 et on les rapporte sur l'assemblage précédemment décrit. On procède ensuite à la fixation de la partie supérieure 55 de la mâchoire 52 sur la partie inférieure 56 par fixation à l'aide des vis 57.

Le dispositif de vulcanisation 1 ainsi assemblé est ensuite monté sur une presse de cuisson. Lorsque l'on veut réaliser la vulcanisation d'une ébauche de pneumatique cru, on commence par ouvrir le dispositif en actionnant axialement le plateau supérieur 5 et la couronne de fermeture 7. Les secteurs 10 se trouvent ainsi en position fermée en la partie supérieure de la presse, on peut approvisionner le dispositif avec une ébauche de pneumatique qui est posée dans la cavité de moulage, sur la coquille inférieure 2. Le plateau supérieur 5 est actionné en un mouvement axial descendant et il entraîne les secteurs 10 qui descendent avec le plateau tout en s'écartant radialement en position d'ouverture (grâce à l'action combinée des deuxièmes moyens de couplage 20 et des premiers moyens de couplage 30). Les secteurs 10 entraînent à leur tour la couronne de fermeture 7, à partir du moment où les rainures de guidage 12 viennent en butée contre les tiges de guidage 33. Le plateau supérieur 5 continue sa course descendante jusqu'à venir au contact de l'ébauche de pneumatique. La couronne de fermeture 7 est ensuite actionnée dans un mouvement axial descendant et l'action des premiers moyens de couplage 30 provoque la fermeture des secteurs 10 autour du sommet de l'ébauche de pneumatique. La couronne de fermeture 7 assure le maintien en position de fermeture les secteurs 10 et encaisse la pression durant la vulcanisation du pneumatique. Après la cuisson, le dispositif de vulcanisation 1 est actionné en ouverture en déplaçant d'abord en un mouvement axial ascendant la couronne de fermeture 7 pour ouvrir les secteurs 10. Lorsque les tiges de guidage 33 de la couronne de fermeture 7 viennent en butée (par leur protubérance 38 contre la butée 19 en fig. 4 ou par le méplat 38' contre la partie inférieure 62 de la pastille 61 en fig. 5) dans les rainures de guidage 12 des secteurs 10, ces derniers suivent la couronne dans son mouvement ascendant. On imprime ensuite un mouvement axial ascendant au plateau supérieur 5 qui ramène les secteurs 10 en position de fermeture en la partie supérieure de la presse. La cavité de moulage est ainsi complètement dégagée afin de pouvoir évacuer aisément le pneumatique.

D'autres variantes et modes de réalisation de l'invention peuvent être envisagés sans sortir du cadre de ces revendications.

## Revendications

1. Dispositif de vulcanisation (1) à secteurs mobiles radialement pour le moulage et la vulcanisation d'un pneumatique comportant :
• un plateau inférieur (3) supportant une coquille inférieure (2) de moulage de flanc de pneumatique,
• un plateau supérieur (5) mobile axialement supportant une coquille supérieure (4) de moulage de flanc de pneumatique,
• une couronne de fermeture (7) mobile axialement comportant une face intérieure inclinée,
• une pluralité de secteurs (10) adjacents disposés circonférentiellement dont les faces radiales intérieures comportent des garnitures (11) de moulage de la bande de roulement du pneumatique et les faces radiales extérieures (14) inclinées sont aptes à coopérer avec
• des premiers moyens de couplage (30) avec la couronne de fermeture (7) réalisés de sorte que les mouvements axiaux de la couronne de fermeture (7) impliquent un mouvement radial des secteurs (10), ainsi que
• des deuxièmes moyens de couplage (20) des secteurs (10) avec le plateau supérieur (5), aptes à relier les secteurs (10) au plateau supérieur (5) et à autoriser leur mouvement radial,
le dispositif étant **caractérisé en ce que** lesdits deuxièmes moyens de couplage (20) sont ajustables sur la circonférence du plateau supérieur (5).

2. Dispositif selon la revendication 1, **caractérisé en ce que** lesdits premiers moyens de couplage (30) avec la couronne de fermeture (7) comportent une pluralité de pièces de guidage (31) réalisées de manière ajustable sur la circonférence de ladite couronne, chaque pièce de guidage (31) venant coopérer avec une rainure de guidage (12) d'un secteur (10).

3. Dispositif selon l'une des revendications précédentes, **caractérisé en ce que** lesdits deuxièmes moyens de couplage (20) comportent une bordure radialement extérieure (5') dudit plateau supérieur (5) sur laquelle vient en appui un galet (21) monté libre en rotation autour d'un axe horizontal (22) d'un secteur (10).

4. Dispositif selon la revendication 3, **caractérisé en ce que** ledit axe horizontal (22) est supporté par une bride coudée (23) montée sur la face latérale supérieure (17) d'un secteur (10).

5. Dispositif selon l'une des revendications 1 ou 2, **caractérisé en ce que** lesdits deuxièmes moyens de couplage (20) comportent une mâchoire (52) amovible coopérant avec une bordure radialement extérieure (5') du plateau supérieur (5), ladite mâchoire (52) comportant des rails (51) de guidage en coulissement radial d'une traverse horizontale (50) montée sur la face latérale supérieure (17) d'un secteur (10).

6. Dispositif selon la revendication 5, **caractérisé en ce que** ladite mâchoire comprend un rail circulaire (53) apte à coopérer avec une nervure circulaire (54) de forme correspondante de ladite bordure radialement extérieure (5').

7. Dispositif selon l'une des revendications 2 à 6, **caractérisé en ce que** lesdites pièces de guidage (31) sont fixées de manière ajustable dans une encoche circonférentielle (30') de ladite couronne de fermeture (7).

8. Dispositif selon la revendication 7, **caractérisé en ce que** ladite pièce de guidage (31) comporte une tige de guidage (33) ayant au moins une surface de guidage apte à coulisser dans ladite rainure (12) et un crochet (32) disposé à l'une des extrémités de ladite tige pour coopérer avec ladite encoche circonférentielle (30').

9. Dispositif selon la revendication 8, **caractérisé en ce que** l'autre extrémité de ladite tige de guidage (33) coopère avec des moyens de fixation sur un rebord circulaire de ladite couronne de fermeture (7).

10. Dispositif selon la revendication 9, **caractérisé en ce que** lesdits moyens de fixation comprennent une entretoise (35) comportant une partie circonférentielle (36) de fixation à ladite couronne et une partie radiale (37) de fixation à ladite tige de guidage (33).

11. Dispositif selon la revendication 10, **caractérisé en ce que** la partie circonférentielle (36) de ladite entretoise (35) comporte une encoche (39) qui coopère avec une nervure circonférentielle de forme complémentaire appartenant à ladite couronne de fermeture (7).

12. Dispositif selon l'une des revendications 10 ou 11, **caractérisé en ce que** ladite partie radiale (37) de ladite entretoise (35) comporte une protubérance (38) ou un méplat (38') d'entraînement axial d'un secteur (10).

13. Dispositif selon l'une des revendications 2 à 12, **caractérisé en ce que** ladite rainure de guidage (12) est placée sensiblement dans une partie circonférentielle du centre de gravité d'un secteur.

14. Dispositif selon l'une des revendications 8 à 13, **caractérisé en ce que** ladite surface de guidage des tiges de guidage (33) comprend des plaques (45) à faible coefficient de frottement.

## Patentansprüche

1. Vulkanisierungsvorrichtung (1) mit radial beweglichen Sektoren zum Formen und Vulkanisieren eines Reifens, die Folgendes aufweist:
• eine untere Scheibe (3), die eine untere Schale (2) zum Formen einer Reifenflanke trägt,
• eine axial bewegliche obere Scheibe (5), die eine obere Schale (4) zum Formen einer Reifenflanke trägt,
• einen axial beweglichen Schließkranz (7), der eine geneigte Innenfläche aufweist,
• eine Mehrzahl von benachbarten, in Umfangsrichtung angeordneten Sektoren (10), deren radiale Innenflächen Einsätze (11) zum Formen der Lauffläche des Reifens aufweisen und deren geneigte radiale Außenflächen (14) in der Lage sind, zusammenzuwirken mit
• ersten Mitteln zum Koppeln (30) mit dem Schließkranz (7), die dergestalt realisiert sind, dass die axialen Bewegungen des Schließkranzes (7) eine radiale Bewegung der Sektoren (10) implizieren, sowie
• zweiten Mitteln zum Koppeln (20) der Sektoren (10) mit der oberen Scheibe (5), die in der Lage sind, die Sektoren (10) mit der oberen Scheibe (5) zu verbinden und ihre radiale Bewegung zu gestatten,
wobei die Vorrichtung **dadurch gekennzeichnet ist, dass** die genannten zweiten Mittel zum Koppeln (20) am Umfang der oberen Scheibe (5) anpassbar sind.

2. Vorrichtung nach Anspruch 1, **dadurch gekennzeichnet, dass** die genannten ersten Mittel zum Koppeln (30) mit dem Schließkranz (7) eine Mehrzahl von Führungsteilen (31), die am Umfang des genannten Kranzes anpassbar realisiert sind, aufweisen, wobei jedes Führungsteil (31) mit einer Rille zum Führen (12) eines Sektors (10) zusammenwirkt.

3. Vorrichtung nach einem der vorangehenden Ansprüche, **dadurch gekennzeichnet, dass** die genannten zweiten Mittel zum Koppeln (20) einen radial äußeren Rand (5') der genannten oberen Scheibe (5) aufweisen, an dem eine Rolle (21), die um eine horizontale Achse (22) eines Sektors (10) frei drehbar montiert ist, abgestützt ist.

4. Vorrichtung nach Anspruch 3, **dadurch gekennzeichnet, dass** die genannte horizontale Achse (22) durch einen abgewinkelten Ansatz (23), der an der oberen Seitenfläche (17) eines Sektors (10) montiert ist, getragen wird.

5. Vorrichtung nach einem der Ansprüche 1 oder 2, **dadurch gekennzeichnet, dass** die genannten zweiten Mittel zum Koppeln (20) eine abnehmbare Backe (52), die mit einem radial äußeren Rand (5') der oberen Scheibe (5) zusammenwirkt, aufweisen, wobei die genannte Backe (52) Schienen (51) zum Führen in radialer Verschiebung einer horizontalen Traverse (50), die an der oberen Seitenfläche (17) eines Sektors (10) montiert ist, aufweist.

6. Vorrichtung nach Anspruch 5, **dadurch gekennzeichnet, dass** die genannte Backe eine kreisförmige Schiene (53), die in der Lage ist, mit einer kreisförmigen Rippe (54) mit entsprechender Form des genannten radial äußeren Rands (5') zusammenzuwirken, aufweist.

7. Vorrichtung nach einem der Ansprüche 2 bis 6, **dadurch gekennzeichnet, dass** die genannten Führungsteile (31) einstellbar in einer Umfangsnut (30') des genannten Schließkranzes (7) befestigt sind.

8. Vorrichtung nach Anspruch 7, **dadurch gekennzeichnet, dass** das genannte Führungsteil (31) einen Führungsstab (33), der mindestens eine Führungsfläche besitzt, die in der Lage ist, in der genannten Rille (12) verschoben zu werden, und einen Haken (32), der an einem der Enden des genannten Stabs angeordnet ist, um mit der genannten Umfangsnut (30') zusammenzuwirken, aufweist.

9. Vorrichtung nach Anspruch 8, **dadurch gekennzeichnet, dass** das andere Ende des genannten Führungsstabs (33) mit Mitteln zur Befestigung an einer kreisförmigen Kante des genannten Schließkranzes (7) zusammenwirkt.

10. Vorrichtung nach Anspruch 9, **dadurch gekennzeichnet, dass** die genannten Mittel zur Befestigung einen Steg (35) umfassen, der einen Umfangsteil (36) zur Befestigung an dem genannten Kranz und einen radialen Teil (37) zur Befestigung an dem genannten Führungsstab (33) aufweist.

11. Vorrichtung nach Anspruch 10, **dadurch gekennzeichnet, dass** der Umfangsteil (36) des genannten Stegs (35) eine Nut (39) aufweist, die mit einer Umfangsrippe komplementärer Form, die zu dem genannten Schließkranz (7) gehört, zusammenwirkt.

12. Vorrichtung nach einem der Ansprüche 10 oder 11, **dadurch gekennzeichnet, dass** der genannte radiale Teil (37) des genannten Stegs (35) einen Vorsprung (38) oder eine Abflachung (38') zum axialen Antrieb eines Sektors (10) aufweist.

13. Vorrichtung nach einem der Ansprüche 2 bis 12, **dadurch gekennzeichnet, dass** die genannte Rille zum Führen (12) weitestgehend in einem Umfangsteil des Schwerpunkts eines Sektors platziert ist.

14. Vorrichtung nach einem der Ansprüche 8 bis 13, **dadurch gekennzeichnet, dass** die genannte Führungsfläche der Führungsstäbe (33) Platten (45) mit niedrigem Reibungskoeffizienten umfasst.

## Claims

1. Vulcanizing device (1) with radially mobile segments for moulding and vulcanizing a tyre comprising:
• a bottom plate (3) supporting a bottom shell (2) for moulding a tyre sidewall,
• an axially mobile top plate (5) supporting a top shell (4) for moulding a tyre sidewall,
• an axially mobile closure ring (7) comprising an inclined interior face,
• a plurality of circumferentially arranged adjacent segments (10) of which the interior radial faces comprise linings (11) for moulding the tread of the tyre and of which the inclined exterior radial faces (14) are able to collaborate with:
• first means (30) of coupling with the closure ring (7) which are produced in such a way that the axial movements of the closure ring (7) involve a radial movement of the segments (10), and
• second means (20) of coupling the segments (10) to the top plate (5) which are able to connect the segments (10) to the top plate (5) and to allow their radial movement,
the vulcanizing device being **characterised in that** said second means (20) of coupling are adjustable on the circumference of the top plate (5).

2. Device according to Claim 1, **characterized in that** the said first means (30) of coupling with the closure ring (7) comprise a plurality of guide pieces (31) produced adjustably on the circumference of the said ring, each guide piece (31) coming to collaborate with a guide groove (12) of a segment (10).

3. Device according to one of the preceding claims, **characterized in that** the said second means (20) of coupling comprise a radially exterior rim (5') of the said top plate (5) against which rim a roller (21) mounted with freedom to rotate about a horizontal axle (22) of a segment (10) comes to press.

4. Device according to Claim 3, **characterized in that** the said horizontal axle (22) is supported by a cranked flange (23) mounted on the top lateral face (17) of a segment (10).

5. Device according to one of Claims 1 and 2, **characterized in that** the said second means (20) of coupling comprise a removable jaw (52) collaborating with a radially exterior rim (5') of the top plate (5), the said jaw (52) comprising guide rails (51) for guiding the radial sliding of a horizontal crosspiece (50) mounted on the top lateral face (17) of a segment (10).

6. Device according to Claim 5, **characterized in that** the said jaw comprises a circular rail (53) able to collaborate with a correspondingly shaped circular rib (54) of the said radially exterior rim (5').

7. Device according to one of Claims 2 to 6, **characterized in that** the said guide pieces (31) are fixed adjustably in a circumferential notch (30') of the said closure ring (7).

8. Device according to Claim 7, **characterized in that** the said guide piece (31) comprises a guide rod (33) having at least one guide surface able to slide in the said groove (12) and a hook (32) arranged at one of the ends of the said rod to collaborate with the said circumferential notch (30').

9. Device according to Claim 8, **characterized in that** the other end of the said guide rod (33) collaborates with means of attachment to a circular lip of the said closure ring (7).

10. Device according to Claim 9, **characterized in that** the said means of attachment comprise a spacer piece (35) comprising a circumferential part (36) for attachment to the said ring and a radial part (37) for attachment to the said guide rod (33).

11. Device according to Claim 10, **characterized in that** the circumferential part (36) of the said spacer piece (35) comprises a notch (39) which collaborates with a complementary-shaped circumferential rib belonging to the said closure ring (7).

12. Device according to either of Claims 10 and 11, **characterized in that** the said radial part (37) of the said spacer piece (35) comprises a protrusion (38) or a flat (38') for axial driving of a segment (10).

13. Device according to one of Claims 2 to 12, **characterized in that** the said guide groove (12) is positioned substantially in a circumferential part of the centre of gravity of a segment.

14. Device according to one of Claims 8 to 13, **characterized in that** the said guide surface of the guide rods (33) comprises plates (45) that have a low co-efficient of friction.
